# EUROPEAN PATENT APPLICATION

(11) **EP 4 618 497 A1**
(43) Date of publication of application: **17.09.2025**
(21) Application number: 25163289.9
(22) Date of filing: 12.03.2025
(51) Int. Cl.: H04L 41/16, H04L 41/147, H04L 41/14, H04L 41/142, H04L 41/5025, H04L 41/0893, H04L 43/55, H04L 41/0681, H04L 41/0823, H04L 41/5009, H04W 24/02

(54) **NETWORK INTELLIGENCE-AS-A-SERVICE IN A.I.-NATIVE TELECOMMUNICATION SYSTEMS**

(30) Priority: 13.03.2024 IN 202441018148; 07.03.2025 US 202519073415
(71) Applicant: Mavenir Systems, Inc., Richardson, TX 75081 (US)
(72) Inventor: SIVARAJ, Rajarajan, Plano, 75074 (US); SURESHA, Shrinidhi, 560093 Bengaluru (IN); KENJALE, Pankaj, Plano, 75024 (US); LARSON, Brandon, Dallas, 75287 (US)
(74) Representative: dompatent von Kreisler Selting Werner - Partnerschaft von Patent- und Rechtsanwälten mbB

(57) **Abstract**

A system and method for modelling, generating intelligence of and optimization of interdependent network entities in a wireless telecom network with a computer using machine learning that includes receiving network entity-specific data relating to a network function and imputing missing values in the received network entity-specific data. Groups of interdependent network entities are associated with each other to generate aggregated data to determine an impact each interdependent network entity has on the group and for predicting Key Performance Indicators (KPIs) of the interdependent network entities based on the aggregated data. From this information, optimizations to improve the KPIs are generated and tested, where control actions are implemented based on the outcome of the tested optimizations.

## Description

### BACKGROUND

### 1. Field of the Disclosure

The present disclosure relates to Artificial intelligence (A.I.) and Analytics for mobile telecommunication systems.

### 2. Description of Related Art

Prior art telecom platforms are limited in their ability to provide Artificial intelligence (A.I.) services due to a lack of a holistic services-based A.I. framework. A.I. services have been built as individual apps, and not as common services offered by the platform. This increases the development time and cost of the apps, while not binding the apps to a common intelligence framework. Moreover, it has limited the apps from leveraging common intelligence information and sharing of intelligence capabilities among apps.

A.I. platforms, such as C3.ai, then offered common SDKs to develop A.I. apps, but lacked data processing, Machine Learning (ML) training, Inference, life cycle management, continuous performance monitoring and test service capabilities for enabling the apps to build and test efficient models.

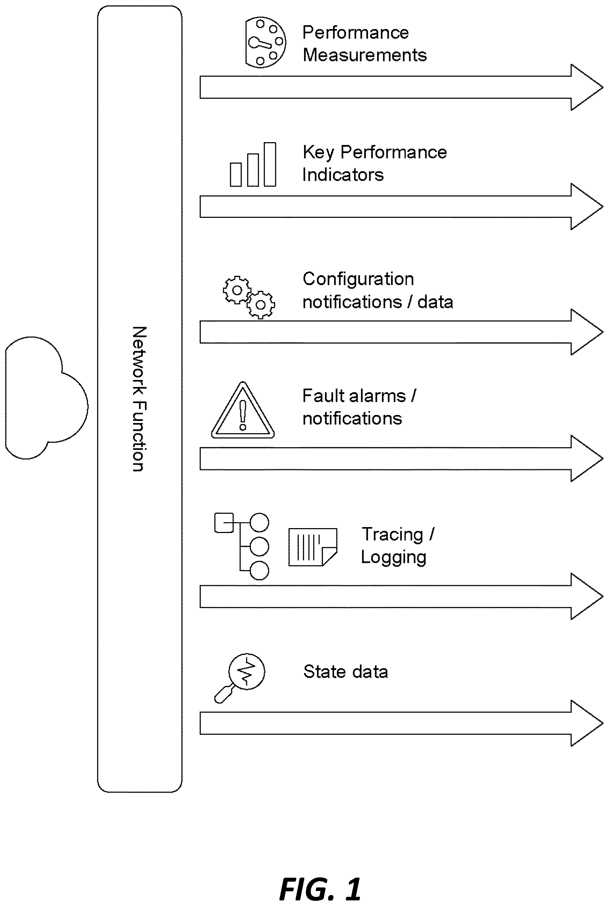

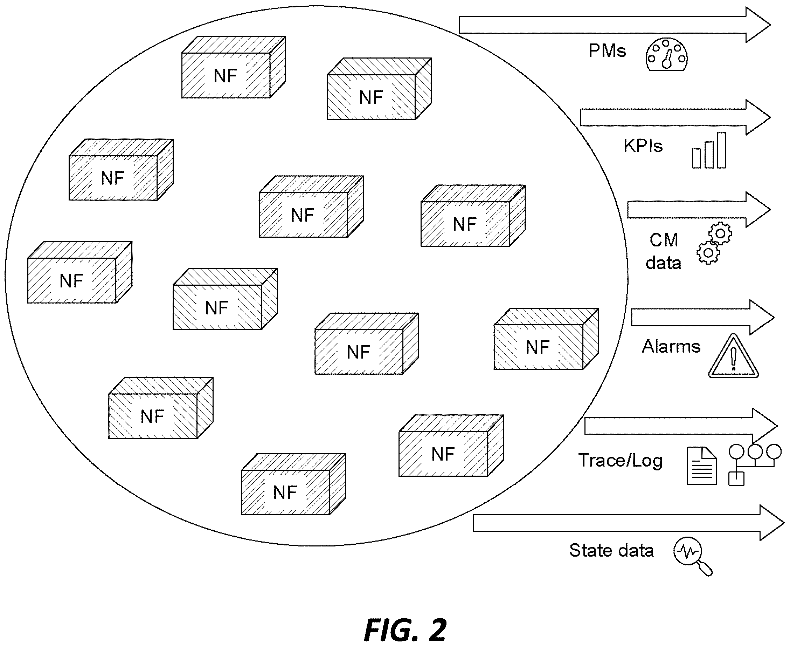

Data heterogeneity is another major problem faced by A.I. and Analytics for mobile telecom systems. The problems include among others: the management or other related sub-functions of a network function (NF) can produce different types of data, as shown in FIG. 1. These types include: 1) Performance Measurements (PM); 2) Key Performance Indicators (KPI); 3) Configuration Management (CM) data and notifications; 4) Fault management (FM) data, alarms and notifications; 5) Trace reports based on network events; and 6) State data regarding individual cells, network entities (such as cells) and network functions. FIG. 2 illustrates different types of network data originating from different NFs with different NF types.

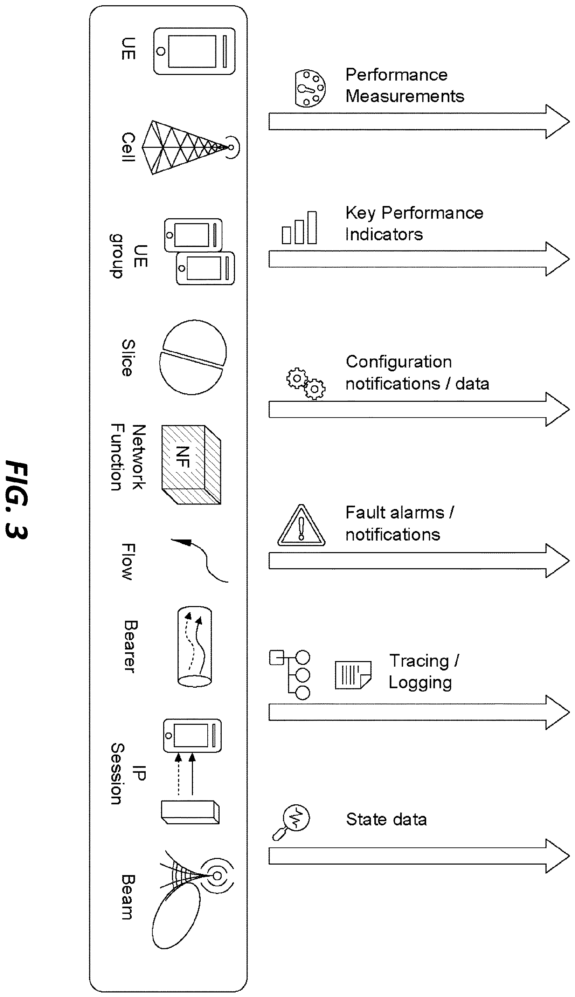

The telecom network can generate these different types of data from the management functions of the NFs at different levels of granularity, such as User Equipment (UE) or UE-level, UE group-level, cell-level, beam-level, Quality of Service (QoS) flow-level, IP session-level, radio bearer-level, NF-level, slice-level, etc., as shown in FIG. 3.

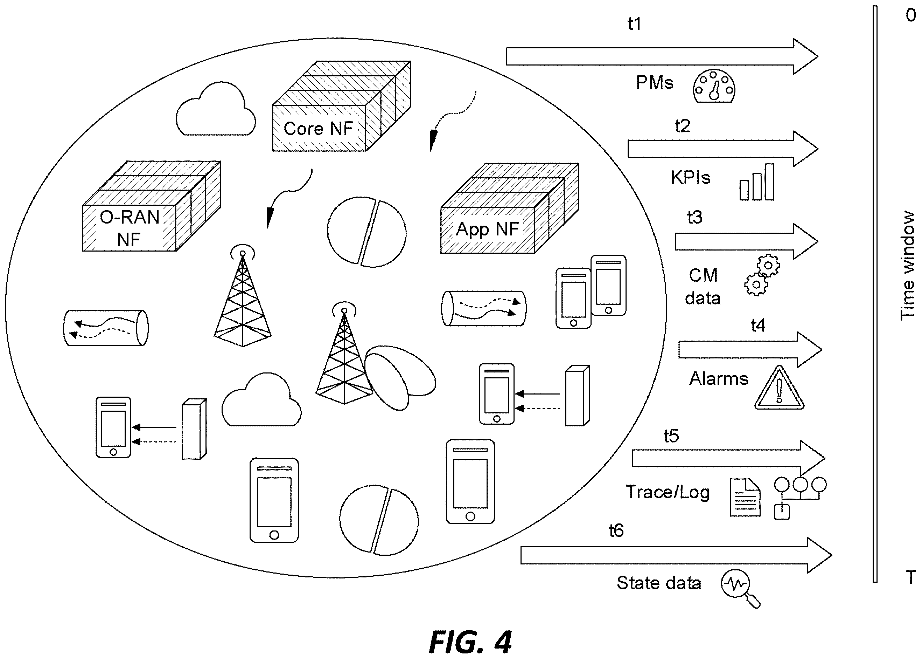

Additionally, the telecom network can generate data from the management functions of different network functions at different instances of time, during a reporting window, as shown in FIG. 4.

The following are the key issues concerning data dynamics, involving the intricacies and inter-dependencies across the data discussed in the above scenarios:
1) Inter-dependency across data pertaining to different types: For example, a PM/KPI measured/reported for a given time window may be impacted by a configuration parameter modified at the beginning of the time window. Hence, the individual data types cannot be seen in isolation.
2) Inter-dependency across data pertaining to different NFs or network entities: e.g., a config parameter for one cell, which could be the handover trigger threshold, may be impacted by the config parameter for another cell, which could be the load threshold.
3) Inter-dependency across data pertaining to different levels of granularity: e.g., a UE's network state, such as Radio Resource Control (RRC) connectivity, is impacted by a cell's PM, such as cell-specific number of RRC connected UEs, active UEs and PRB utilization.
4) Inter-dependency across data arriving at different times: e.g., a UE-level PM arriving at time t' may be impacted by a related event traced at time t".
5) Missing data for a continuous duration of time, caused by operational upgrades, network outage or any anticipated/unanticipated disruption in service.

The problems with Data Validation include: 1) There may be compromises in the integrity of the data due to software bugs or infrastructure concerns, such as inadequate storage memory resulting in data/counter drops, and the like, resulting in out-of-range values, or abnormal and skewed data distributions.

The problems with Feature Engineering include: 1) The KPI of a given network entity, e.g., a 5G cell, is impacted by the configuration parameters and state information not just pertaining to that cell, but also pertaining to other network entities, such as neighbor cells, and/or NFs such as the DUs that anchor/serve the cell, and/or UEs served by the cells or DUs that anchor the cell, and the like; and 2) The feature selection should focus on the right set of input features (PM, CM, FM, traces, UE state information, Radio Access Network (RAN) state information, etc.) from across one or more related or inter-dependent network entities and NFs towards modelling the KPI of a given network entity to avoid issues like over-fitting, and the like, while yielding high accuracy scores and accurate feature importance quantification.

The issues with Model Heterogeneity include: 1) Different A.I. models for the same KPI, pertaining to a given network entity, may have to be built for different purposes, such as: a) causation - to model the KPI based on the set of input features, along with quantifying the feature importance score for each input feature. This is used for predicting the KPIs from the instantaneous set of input features, based on the causation model for the KPI; b) Forecasting - to forecast the KPI in advance (seconds in advance, minutes in advance, hours in advance or even days in advance) with the required set of input features; and c) Recommendation - to recommend which configuration parameters or state variables need to be modified and to which new value towards improving the KPI; 2) Different A.I. models may have to be built for different KPIs; 3) The trained A.I. models should account for heterogeneity across network deployments, for the models to scale across different network deployments with variations in topology size, number of network entities, UEs, traffic patterns, and the like; and 4) The machine learning algorithm-specific hyper-parameters need to be tuned differently for different A.I. models. Different degrees of scaling and normalization must be applied across different input features towards training models for different KPIs, to avoid over-fitting and extensibility of the model across different data ranges.

The issues with A.I. life cycle management include: 1) There should be updates to the version of the ML models deployed in the A.I. inference engine with continuous learning and performance monitoring. The key aspect here is to define the policies or trigger conditions for updating the ML models from the training engine in the inference engine; 2) Furthermore, there needs to be a version control of the ML models, along with ML catalogue service in order to commit to version upgrades or roll back from version upgrades to previous versions; and 3) A.I. life cycle management also deals with updating the input features used by the ML algorithm to train the model and updating the hyper-parameters pertaining to the algorithm towards updating the model.

The issues with A.I. test include: 1) Since misconfigurations or sub-optimal decision variables can impact the operations, performance and economics of a network in large-scale production, configurations should be carefully exercised on the network functions after carefully validating the control and configuration actions via highly optimized test tools, modelling 'what-if' scenarios and 'generating' prospective PMs and KPIs based on the control/configuration actions, before allowing to percolate the configuration updates down to the network functions and their entities.

As such, the incoherent methods used to apply A.I. to telecom systems have not been able to overcome the technical problem that data collected for analysis and control may be impacted by many diverse systems inputs all having different data types, differing data formats and may be dynamically changing.

Accordingly, there is a need for a system and method utilizing A.I. and Analytics that overcomes, alleviates, and/or mitigates one or more of the aforementioned and other deleterious effects of prior art mobile telecom systems.

### SUMMARY

What is desired is a system and method that utilizes A.I. and Analytics for mobile telecom systems when the management or other related sub-functions of a network function (NF) produce different types of data.

It is further desired to provide a system and method that utilizes A.I. and Analytics for mobile telecom systems having different types of network data originating from different NFs with different NF types.

It is also desired to provide a system and method that utilizes A.I. and Analytics for mobile telecom systems when the telecom network generates different types of data from the management functions of the NFs at different levels of granularity.

It is still further desired to provide a system and method that utilizes A.I. and Analytics for mobile telecom systems when the telecom network generates data from the management functions of different network functions at different instances of time, during a reporting window.

The proposed invention relates to a holistic framework that provides Network Intelligence-as-a-Service (NIaaS) via A.I. platforms (such as the RAN Intelligent Controller (RIC), Network Data Analytics Function (NWDAF), etc.) and Artificial Intelligence (A.I.) services in telecommunication networks towards modelling, generating intelligence and optimizing the network. The framework enables A.I. services to be an inherent and integral part of large-scale operational telecom deployments across RAN, packet core, application and other domains.

The proposed NIaaS framework design addresses problems related to:
Data Heterogeneity and validation: This deals with heterogeneity in network observability and monitoring data from the telecom network to be accounted for generating intelligence about the network. The observability and monitoring of data also needs to be validated for integrity.

Feature Engineering: This deals with grouping and/or classifying the appropriate set of network functions and/or network entities together towards learning and modelling the inter-dependences among one another, and towards selecting the appropriate number of input features from across the network functions and/or network entities in modelling the network,

Model Heterogeneity: This deals with developing different A.I. models for different KPIs using different features for predicting the KPIs, forecasting the KPIs, for generating the optimal recommendations on control and configuration parameters towards improving the KPIs, for imputation of missing features and forecasting the network features in advance,
A.I. life cycle management: This deals with deploying the trained A.I. model in the inference engine, upgrading and updating the A.I. models online and defining triggers towards the online update/upgrade, deploying the updated A.I. model in the inference engine, version control of the A.I. models towards committing/rolling back the A.I. models in the inference engine based on continuous performance monitoring of network performance based on deployed A.I. models/versions in the inference engine,
A.I. test: This deals with developing A.I. test models to test the optimization recommendations from the inference engine on the resulting KPIs and observability PMs of the network by the relevant stakeholders (such as, Operations teams), before percolating the recommendations to the underlying network functions and network entities.

In some embodiments either alone or together with any one or more of the aforementioned and/or after-mentioned embodiments, a system is provided utilizing Network Intelligence-as-a-Service (NIaaS) via A.I. platforms comprising a RAN Intelligent Controller (RIC) or a Network Data Analytics Function (NWDAF) and Artificial Intelligence (A.I.) services in a telecommunication network directed toward modelling, generating intelligence and optimizing the network. The framework enables A.I. services to be an inherent and integral part of large-scale operational telecom deployments across RAN, packet core, application and other domains.

In one configuration, a method for modelling, generating intelligence of and optimization of interdependent network entities in a wireless telecom network via a computer utilizing machine learning is provided comprising the steps of: receiving network entity-specific data relating to a network function, inputting missing values in the received network entity-specific data, and associating groups of interdependent network entities to generate aggregated data for joint observation to evaluate an impact each interdependent network entity has on each other. The method further comprising the steps of: predicting Key Performance Indicators (KPIs) of the interdependent network entities based on the aggregated data, and generating optimizations to improve the KPIs for the interdependent network entities based on the predicted KPIs. Lastly, the method comprises the steps of: testing the optimizations on a model and receiving input from the model on which the optimizations are tested, and implementing control actions to various network functions based on the outcome of the tested optimizations.

The step of generating aggregated data can further comprise performing a time-correlated aggregation of Operations, Administration, and Maintenance of Fault, Configuration, Accounting, Performance, and Security (OAM FCAPS) data of different types from across different network functions and/or different interdependent network entities and at different levels. Likewise, the OAM FCAPS can further comprise Fault Management (FM), Configuration Management (CM), Performance Measurement (PM), and Trace Reporting (TR) based on network events.

It is further understood that the different levels can be selected from the group consisting of: User Equipment (UE) level, Network Function (NF) level, UE group level, bearer level, slice level, slice subnet level, Quality of Service (QoS) level, Protocol Data Unit (PDU) session level and combinations thereof.

The method can also comprise the steps of validating the entity-specific data and generating an alert when the data exceeds a threshold value or if the data has any sanitation issues and may include scaling and normalization of the entity-specific data. Alternatively, the step of generating optimizations can comprise analyzing data distribution and statistics relating to the entity-specific data, and generating the predicted KPI's based in part on the analysis of data distribution and statistics.

It will be understood by those of skill in the art that the optimizations relate to adjustments to configuration parameters or control decision variables, which can further include exercising closed-loop control action to modify the configuration parameters and/or the control decision variables on the network function, or modifying configurable hyper-parameters of the machine learning models, or triggering machine learning life cycle management operations via a graphic user interface.

Finally, the method can include determining a causal factor underlying each network entity-specific data and generating an alert notification based on a predicted KPI data point, where the network entity-specific data relates to network functions and is received in real time.

The above-described and other features and advantages of the present disclosure will be appreciated and understood by those skilled in the art from the following detailed description, drawings, and appended claims.

### DESCRIPTION OF THE DRAWINGS

FIG. 1 illustrates different types of data originating from a given Network Function (NF);
FIG. 2 illustrates different types of network data originating from different NFs with different NF types;
FIG. 3 illustrates different types of network data at different levels of granularity;
FIG. 4 illustrates different types of network data arriving at different times;
FIG. 5 is a sequence of A.I. operations according to one configuration of the system;
FIG. 6 illustrates a Data Engineering service with imputation and aggregation;
FIG. 7 is a representation of Clustering of cells;
FIG. 8 illustrates distribution statistics, such as CDF;
FIG. 9 illustrates A.I. model development repository suite;
FIG. 10 illustrates A.I. model life cycle management;
FIG. 11 illustrates digital twin and generated observability;
FIG. 12 illustrates holistic NIaaS framework design; and
FIGS. 13A and 13B comprise a logical view of the services-based architecture of the NIaaS framework.

### DETAILED DESCRIPTION

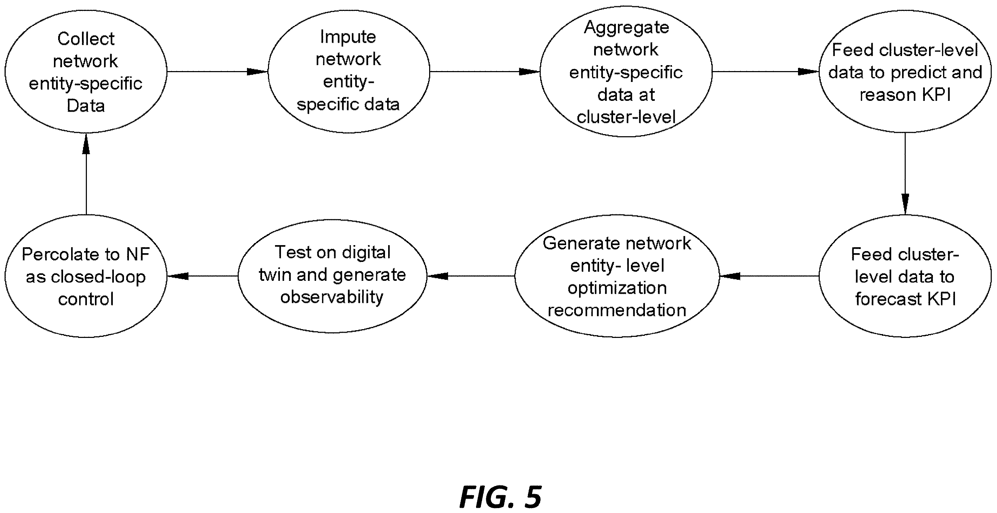

The NIaaS framework offers a full-fledged set of A.I. and data management services for the following sequence of A.I. operations as depicted in FIG. 5.

Step 1. Collection of network entity-specific data 100.

Step 2. Imputation of network entity-specific data 102.

Step 3. Cluster-level correlation and aggregation of network entity-specific data 104.

Step 4. Feeding of cluster-level aggregated data to predict the KPI 106.

Step 5. Feeding of cluster-level aggregated data to forecast the KPI 108.

Step 6. Recommendation of optimizations for network entities to improve the KPI (open-loop/closed-loop) 110.

Step 7. Test the recommendations on the model and generate the observability from the model 112.

Step 8. Percolate the recommended control actions, that are approved during the test phase, down to the NFs as per the closed-loop control/configuration process 114.

Repeat again from step 1, across the subsequent periodic windows.

The NIaaS framework offers the following services:
1) Data Engineering services 200: These services deal with processing of data from various network functions and network entities, and the establishment of relevant data pipelines.
2) Data science services 300: These services deal with validating the integrity of data, and generation of statistics for the required KPIs from the data.
3) A.I. model training services 400: These services deal with training models using relevant algorithms, based on the identified set of input features, output KPIs, ML hyper-parameters, loss functions, and the like.
4) A.I. inference services 500: These services deal with making use-case-specific inferences on live data feed, based on the deployed A.I. model.
5) A.I. life cycle management services 600: These services deal with updating the trained model, cataloguing the model, deploying the trained model in inference engine, version controlling the ML model (including commits and roll backs), and the like.
6) A.I. test services 700: These services deal with offering a digital twin of the underlying network, accounting for the spatial and temporal features of the RAN, against which closed-loop control recommendations can be tested towards optimizing the underlying RAN.
7) A.I. visualization services 800: These services deal with offering a visualization of data intelligence and A.I. outputs towards a zero-code monitoring and configuration framework.

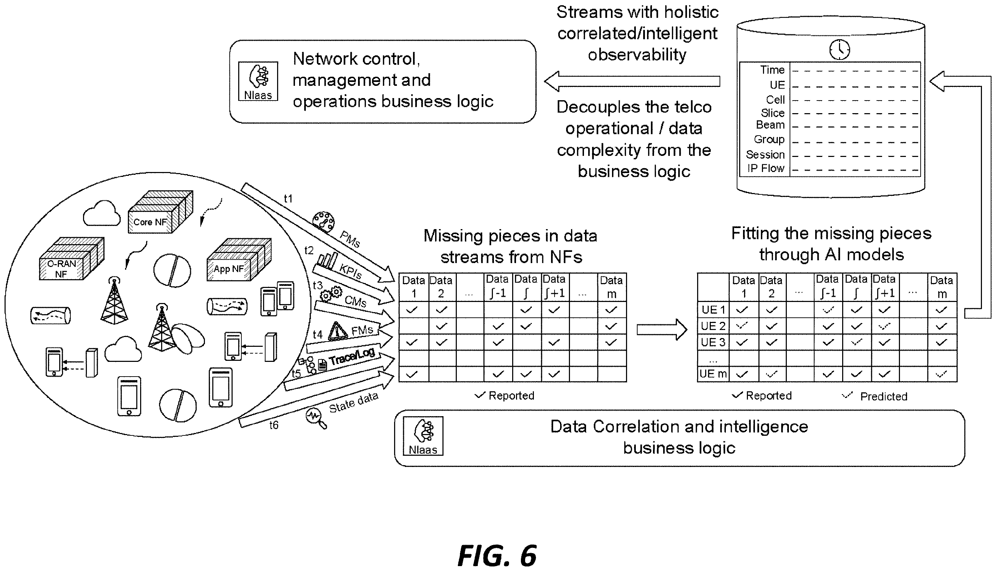

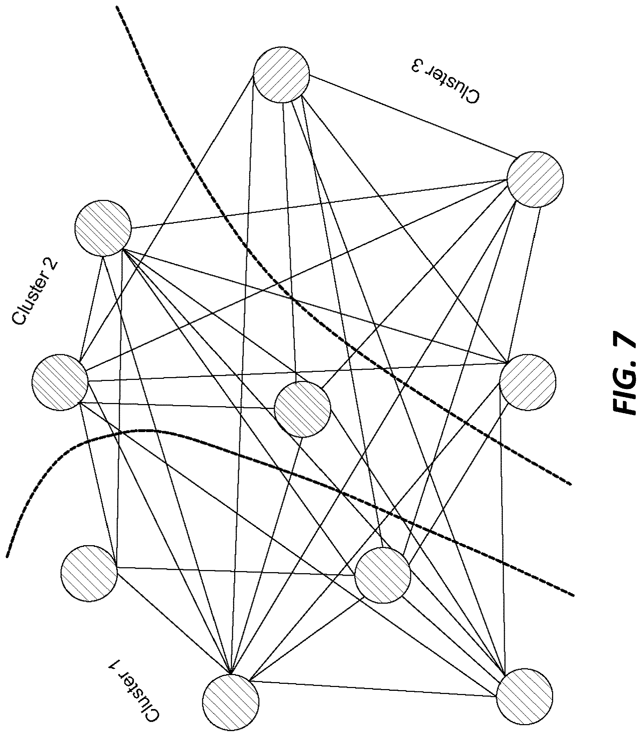

The Data Engineering services 200, offered by the NIaaS framework, as shown in Fig. 6, can be described as follows:
1) Multi-dimensional imputation-as-a-Service 202: The NIaaS framework produces this service to intelligently impute missingness in the live data feed coming from the underlying network. The missingness could be due to one or more of the following causes: (i) operational upgrades, (ii) planned / unplanned outage, (iii) lack of support for the desired granularity, and the like.
2) Clustering-as-a-Service 204: The NIaaS framework produces this service to cluster groups of inter-dependent network entities (such as, cells), as shown in Fig. 7, for joint observability towards evaluating the impact of each other and joint optimization towards improving the KPI of the network entities.
3) Data Aggregation-as-a-Service 206: The NIaaS framework produces this service to perform a time-correlated aggregation of OAM FCAPS (FM, CM, PM, Trace) data of different types from across different NFs and/or network entities (cells, and the like) and at different levels (UE-level, cell-level, NF-level, UE group-level, bearer-level, slice-level/slice subnet level, QoS flow-level, PDU session-level and the like).

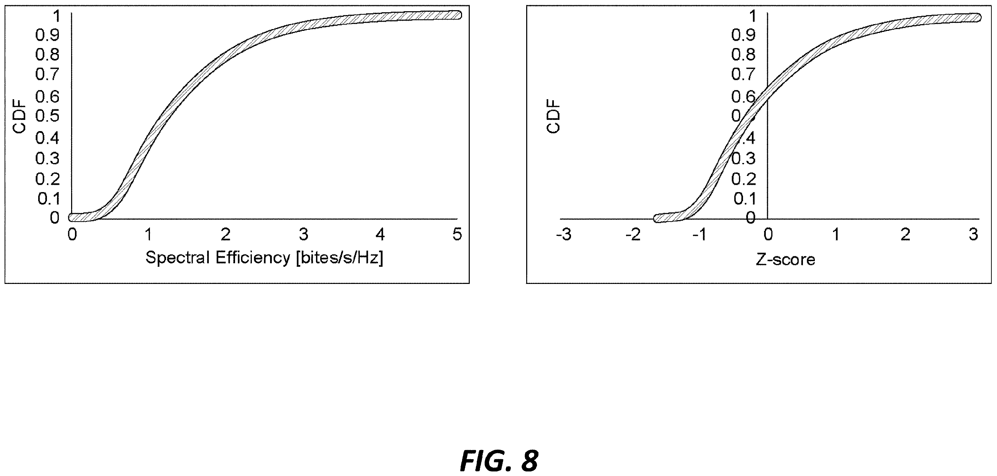

The Data Science Services 300, offered by the NIaaS framework, are as follows:
1) Data integrity validation-as-a-Service 302: The NIaaS framework produces this service to validate the integrity of the data towards creating alerts when the reported data is out of range, or while data has any sanitization issues.
2) Data stats-as-a-Service 304: The NIaaS framework produces this service to generate insights about the data distribution and statistics from the data points pertaining to the desired KPI, such as the CDF (as shown in FIG. 8), mean, median, standard deviation, 5^{th} percentile, 10^{th} percentile, 25^{th} percentile, 75^{th} percentile, 97^{th} percentile, Z-score, and the like.

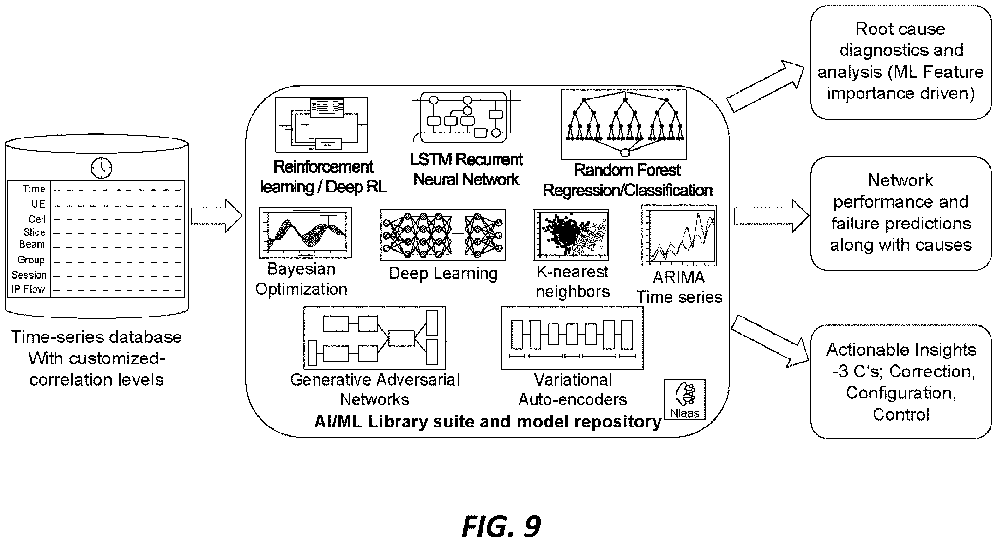

The A.I. ML Model Training Services 400, offered by the NIaaS framework, as shown in FIG. 9, are as follows:
1) Feature engineering-as-a-Service 402: The NIaaS framework produces this service for selecting the features and for scaling and normalization of the features towards training the model for the selected KPI.
2) Causation Modelling and Updating-as-a-Service 404: The NIaaS framework produces this service for training a model from the library suite of ML algorithms, hosted in the NIaaS repository, for predicting the KPI as a function of the selected input features and quantifying the feature importance scores for the selected features.
3) Forecasting Modelling and Updating-as-a-Service 406: The NIaaS framework produces this service for training a model from the library suite of ML algorithms, hosted in the NIaaS repository, for forecasting the KPI minutes/hours in advance, as a function of the selected input features.
4) Recommendations Modelling and Updating-as-a-Service 408: The NIaaS framework produces this service for training a model from the library suite of ML algorithms, hosted in the NIaaS repository, for generating recommendations on configuration parameters or control decision variables towards enhancing the KPI based on the model trained for the KPI.

The Data Science Services 500, offered by the NIaaS framework, are as follows:
1) Explainability-as-a-Service 502: The NIaaS framework produces this service for "explaining" the causal factors behind each KPI data point.
2) Forecasting Alert Notification-as-a-Service 504: The NIaaS framework produces this service for generating the alert notifications based on the forecasted KPI data point.
3) Analytics-as-a-Service 506: The NIaaS framework produces this service for generating analytics insights, from running the inference on the live data feed.
4) Optimization Recommendations-as-a-Service 508: The NIaaS framework produces this service for generating optimization recommendations as inference feeds based on live data feed.

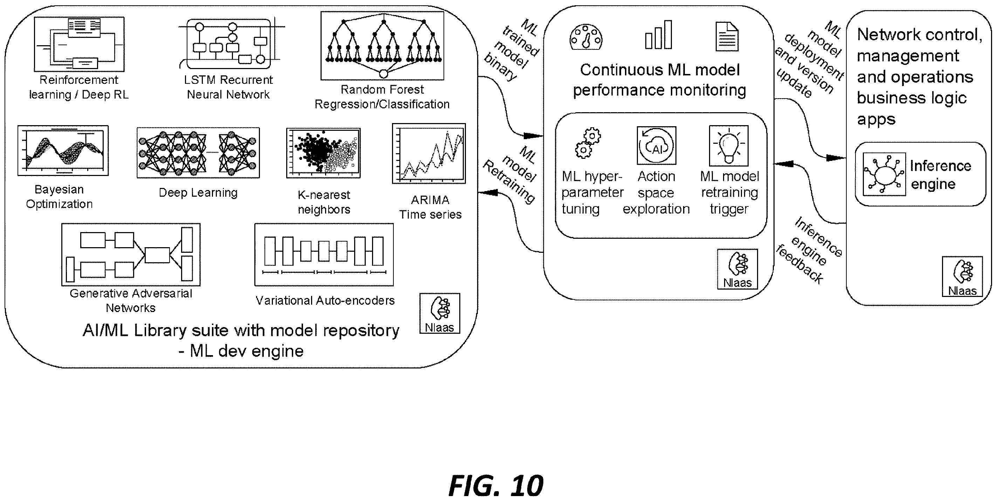

The life cycle management services 600, offered by the NIaaS framework, as shown in FIG. 10, are as follows:
1) A.I. model deployment and update-as-a-Service 602: The NIaaS framework produces this service for updating the A.I. models (such as, modification in the features used to model the KPI, changes in hyper-parameters, and the like) towards deploying the updated models in the inference engine.
2) A.I. model catalogue-as-a-Service 604: The NIaaS framework produces this service for maintaining a catalogue of the A.I. models and their updates.
3) A.I. model version control-as-a-Service 606: The NIaaS framework produces this service for upgrading the A.I. models, and rolling back on A.I. model versions.
4) Continuous performance monitoring-as-a-Service 608: The NIaaS framework produces this service for continuous performance monitoring of the model based on the KPI and performance feedback data from the network. This service is useful to trigger updates to the current version of the A.I. model.

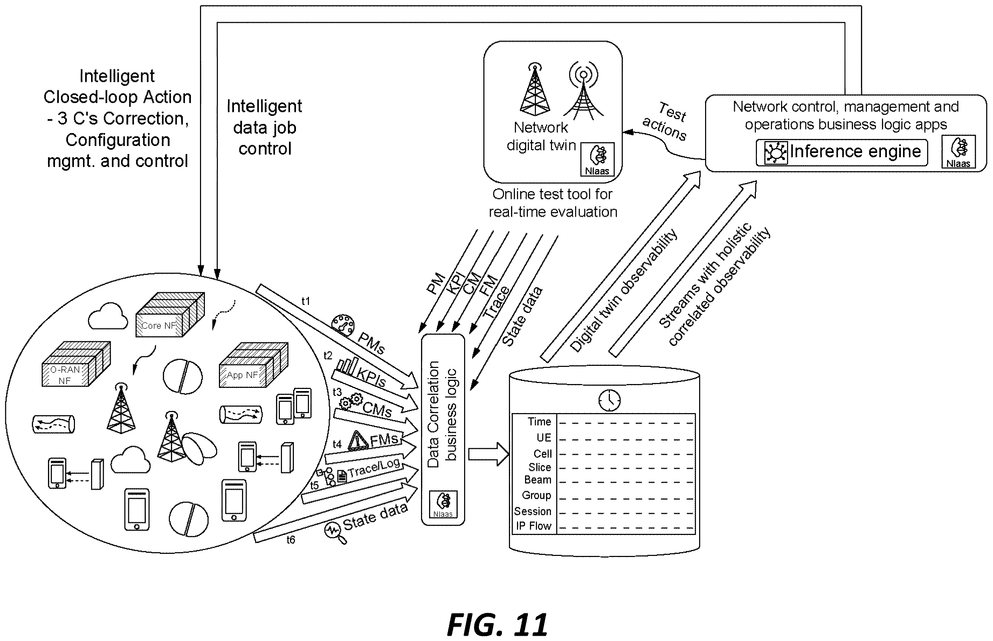

The A.I. test services 700, offered by the NIaaS framework, as shown in FIG. 11, are as follows:
1) Digital twin Configuration and Control-as-a-Service 702: The NIaaS framework produces this service for generating an accurate digital twin of the underlying network, against which the inference engine can test the recommended control or configuration actions and try out different "what if" control/configuration scenarios, as if they were being applied on the real telecom network.
2) Digital twin Generated Observability-as-a-Service 704: The PMs, KPI, CM data, trace measurements etc., can be "generated" from the digital twin, as if it were getting generated from the real network. This service can be used for testing the configuration and control actions from the inference engine and evaluating "what if" scenarios for trying out different combinations of control/configuration actions on the digital twin of the network (due to the impersonation of the network functions and the network entities) and further evaluating the "generated" PMs/KPIs, and the like, (as a result of the control/configuration actions) from the digital twin.
3) Digital twin Recommendation-as-a-Service 706: Following this, the digital twin-as-a-Service also recommends a "Go / No-Go" for the control/configuration actions to be percolated down to the desired NFs or network entities.

The A.I. Visualization Services 800, offered by the NIaaS framework, are as follows:
1) Dashboard-as-a-Service 802: The NIaaS framework produces this service for visualization of data and A.I. insights about the network.
2) Zero-code configuration-as-a-Service 804: The NIaaS framework produces this service for exercising closed-loop control action to modify the configuration parameters and/or the control decision variables on the NFs or modify the configurable hyper-parameters of the A.I. models, or trigger ML life cycle management operations using a GUI.

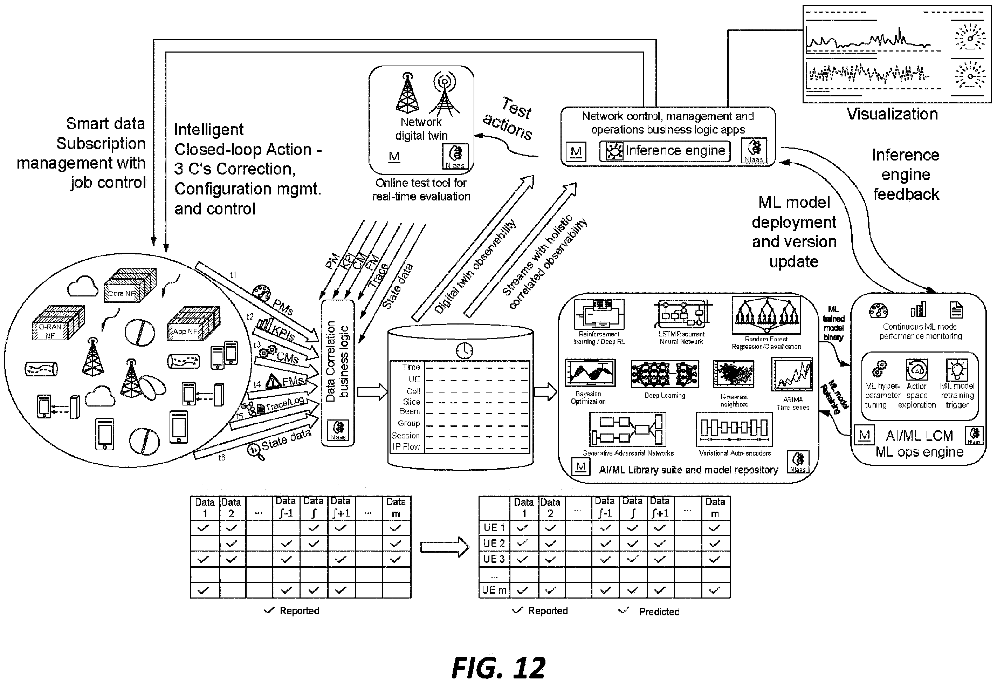

The holistic NIaaS A.I. framework design is shown in Fig. 12.
1) The NFs report the PMs, KPIs, CMs, FMs, Traces, RAN/UE state information and the like at different levels of granularity and at different arrival times from the NFs to the NIaaS framework, hosted in any A.I. platform, such as the RIC for O-RAN domain, NWDAF for packet core domain.
2) The NIaaS framework shall impute the missing values in the reported data set from the NFs and/or their related network entities, perform clustering of network entities and perform time-correlated aggregation of PMs, KPIs, CMs, FMs, Traces, RAN/UE state information from across multiple network entities and/or NFs, and ingests it into the time-series database. In the process, the NIaaS framework also checks for sanity and integrity of the data.
3) From the time-correlated database, the NIaaS framework fetches the dataset into the A.I./ML model training services to train/update the A.I. model based on the desired choice of the ML, algorithm. Also, in parallel, the NIaaS framework fetches the ingested time-series record into the A.I./ML, inference services, containing the inference engine, to make A.I. predictive inferences on the live data feed.
4) Upon completion of the training /update of the A.I. model in the training services, the A.I. ML ops life cycle management service deploys the trained/updated model in the inference engine. This deployment of the ML model in the inference engine could be triggered by an event (such as availability of an updated ML model, such as when the evaluation of the updated ML model on the test data yields an accuracy higher than a given threshold, and the like), or periodically, or when the inference service in the NIaaS framework sends a request to the A.I. ML training service in the NIaaS framework for the availability of an updated A.I. ML model.
5) The A.I. inference service generates optimization recommendations for closed-loop control/configuration action to be exercised on the NFs and their network entities. But before percolating the control/configuration actions on the NFs, the A.I. inference services shall test the control/configuration actions on the digital twin, which would be an accurate representation/impersonation of the underlying network. The digital twin test service shall further generate the observability data (PM, KPI, CM, Trace, and the like) back to the inference engine, that helps the inference service to get a precise picture of the potential KPI improvement in the underlying network because of the configuration/control actions.
6) Following the generated observability on the KPI improvement, the inference service shall proceed with exercising the control/configuration actions on the NFs, and the above sequence repeats.

The NIaaS framework design is based on services-based architecture (SBA) principles. This present disclosure focuses on the high-level services-based architecture principles, for provisioning the NIaaS services in the A.I. platform. This present disclosure proposes the following high-level procedures, based on SBA principles, for provisioning the NIaaS services:
1) Registration of services, capabilities and data types: This procedure allows the service producers of the NIaaS services in the NIaaS framework to registers the services that they produce along with information about their capabilities and data types.
2) Discovery of services, capabilities and data types: This procedure allows the authorized service consumers of the NIaaS services in the NIaaS framework to discover the services registered by the service producers in the NIaaS framework, along with their capabilities and data types, from the services registry.
3) Subscription of services: This procedure allows the authorized service consumers of the NIaaS services in the NIaaS framework to subscribe to services produced by the service producers of the NIaaS services in the NIaaS framework, along with optional filtering conditions.
4) Notifications: This procedure allows the service producers of the NIaaS services in the NIaaS framework to notify the authorized service consumers of the NIaaS services about service availability, model availability/update, model performance notifications, and other data.
5) Read Request and Response: This procedure allows the service consumers of the NIaaS services in the NIaaS framework to request the service producers of the NIaaS services in the NIaaS framework for information and respond back to the request.
6) Write Request and Response: This procedure allows the service consumers of the NIaaS services in the NIaaS framework to request modification of configuration information pertaining to the A.I. services produced by the service producers of the NIaaS services in the NIaaS framework.

The list of service producers in the NIaaS framework, along with the list of services produced by them, is tabulated below:

**Table 1**

| **Service Producers in NIaaS framework** | **List of Services Produced** | | **Authorized Service Consumers in NIaaS framework** | |
|---|---|---|---|---|
| Data Engineering Services Producer | | 1. "Fill-in-the-blanks" multi-dimensional imputation-as-a-Service | | 1. A.I. ML Model training services producer - consumes the services for fetching the training dataset required to train the ML models, |
| | | 2. Clustering-as-a-Service | | 2. A.I. ML Inference Services producer - consumes the services for fetching the live data feed towards making the ML inferences, |
| | | 3. Data Aggregation-as-a-Service | | |
| | | | | 3. A.I. ML life cycle management services producer - consumes the services for continuous performance monitoring for updating (or committing/rolling back) the model versions. |
| | | | | 4. A.I. test services producer - consumes the data aggregation-as-a-Service to aggregate the "generated" data from the digital twin, pertaining to different data types, NF and network entity types, different granularity levels, and the like, in a time-correlated manner. |
| | | | | 5. A.I. Visualization Services producer - consumes the services for live display/plotting of the data points in the data feed |
| Data Science Services Producer | | 1. Data Integrity validation-as-a-Service | | 1. Data Engineering Services producer-consumes the data integrity validation service to validate the integrity and |
| | | 2. Data Statistics-as-a-Service | | sanity of the data. |
| | | | | 2. A.I. ML Model training services producer - consumes the data integrity validation-as-a-Service to filter out dubious or erroneous data from the model training process. |
| | | | | 3. A.I. ML Inference Services producer-consumes the services to make inferences on live data feed that is free of errors or dubious values, and to understand insights about the distribution of data for optimizing the business logic. |
| | | | | 4. A.I. Visualization Services producer-consumes the services for displaying the key statistical distribution insights about the data feed. |
| A.I. ML Model Training Services Producer | | 1. Feature Engineering-as-a-Service | | 1. Data Engineering Services producer-consumes the A.I. ML model training services for modelling the multi-dimensional imputation of the missing network data, and for generating optimized clusters of network entities (such as cells). |
| | | 2. Causation Modelling and Updating-as-a-Service | | |
| | | 3. Forecasting Modelling and Updating-as-a-Service | | |
| | | | | 2. A.I. ML Inference Services producer-consumes the A.I. ML model training services towards deploying the trained model in the inference engine for making inferences on live data feeds, and for making inference engine-triggered modifications on input features and ML hyper-parameters for updating the model. |
| | | 4. Recommendations Modelling and Updating-as-a-Service | | |
| | | | | 3. A.I. Life Cycle Management Services producer - consumes the A.I. ML model training services for initiating model retraining/online update, for defining events towards model retraining and update. |
| | | | | 4. A.I. Visualization services producer-consumes the model training services towards indicating the improvements or decline in model loss functions with respect to the training epochs. |
| A.I. ML Inference Services Producer | | 1. Explainability-as-a-Service | | 1. The Network Functions and their network entities (such as, cells) and/or |
| | | 2. Alert Notification-as-a-Service | | the OSS/BSS layer shall consume these services from the A.I. ML inference service producer. |
| | | 3. Analytics-as-a-Service | | |
| | | 4. Optimization-as-a-Service | | 2. A.I. visualization services producer - consumes these services from the A.I. ML inference service producer for displaying the live inferences/recommendations. |
| A.I. Life Cycle Management Services Producer | | 1. A.I. model deployment and update-as-a-Service | | 1. A.I. ML Inference Services producer - consumes these services towards deploying the updated versions of the ML model in the inference engine, and for triggering updates, commits and rollbacks on the model versions. |
| | | 2. A.I. model catalogue-as-a-Service | | |
| | | 3. A.I. model version control-as-a-Service | | |
| | | | | 2. A.I. Visualization services producer - consumes the continuous performance monitoring-as-a-Service to visualize the impact of the current model version on the network performance. |
| | | 4. Continuous performance monitoring-as-a-Service | | |
| A.I. Test Services Producer | | 1. Digital twin Configuration and Control-as-a-Service | | 1. A.I. ML Inference Services producer - consumes these services to test the desired configuration/control actions on the digital twin and evaluate the generated observability and the Go/No-Go recommendation before percolating the configuration/control actions down to the NFs and their entities. |
| | | 2. Digital twin Generated Observability-as-a-Service | | |
| | | 3. Digital twin Recommendation-as- | | |
| | | a-Service | | 2. A.I. Visualization Services producer - consumes these services to visualize the generated observability from the twin and plot them against the actual observability data from the telco/telecom network, and to visualize the recommendation from the twin against the KPI improvement/decline observed in the network. |
| A.I. Visualization Services Producer | | 1. Dashboard-as-a-Service | | 1. The mobile network operator, the operations engineering teams as well as other NF vendors shall consume these services to gain deeper data and A.I. insights about the network. |
| | | 2. Zero-code configuration-as-a-Service | | |
| | | | | 2. The mobile network operator or the authorized stakeholders shall consume the zero-code configuration-as-a-Service, from the visualization services producer to exercise control/configuration actions on the NFs or on the chosen A.I. models, such as selecting a different algorithm (from the A.I. ML repository suite) for training the model or modifications in the ML algorithm hyper-parameters. |

Table 1 illustrates service producer functions of the NIaaS framework, services produced by the functions and the service consumer functions within and outside of the NIaaS framework - From the perspective of Services-based architecture principles.

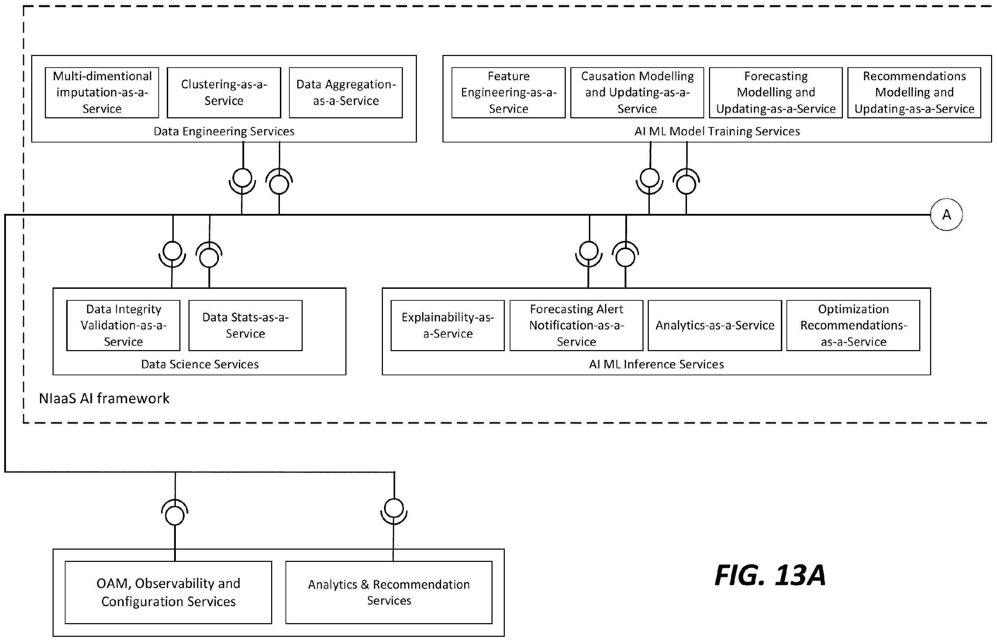

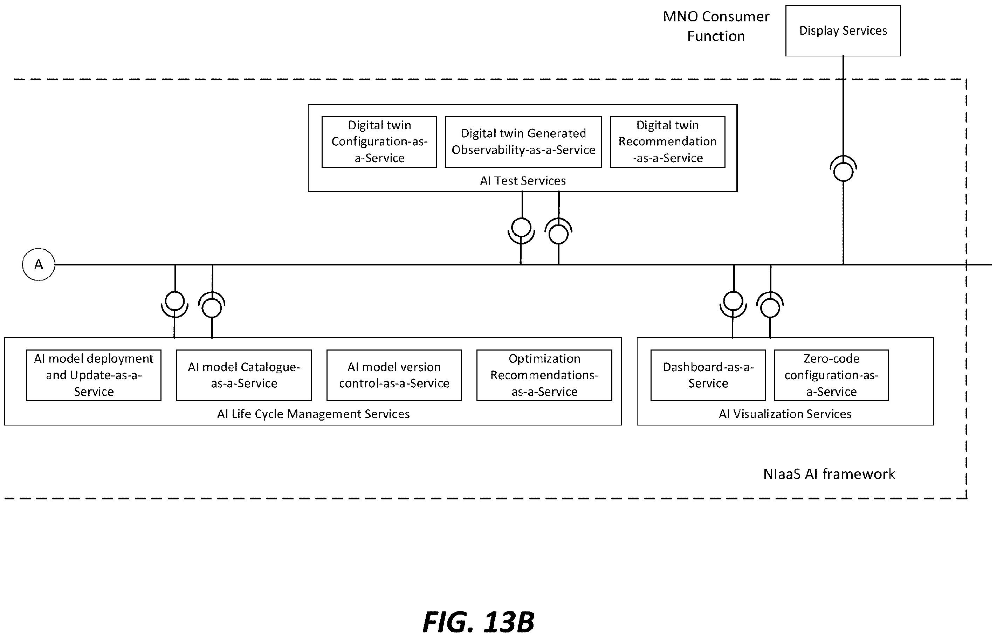

Thus, the proposed logical view of the services-based architecture of the NIaaS framework is presented in FIGS. 13A and 13B. The proposed SBA for the NIaaS framework does not focus on where the service producers, producing the NIaaS A.I. services, and where the service consumers, consuming the NIaaS A.I. services, are deployed, but focuses on the production and consumption of NIaaS A.I. services over services-based interfaces.

One of the preferred implementation architectures of the proposed NIaaS framework is to build the framework as a cloud-native network function (CNF). The CNF can be deployed in the worker node machines of a Kubernetes (K8s) cluster.

Each service producer function, producing the NIaaS services, can be implemented as a set of micro-services, with each micro-service being implemented in one or more K8s pods across the worker nodes of the cluster with high availability and dynamic load balancing across the pods.

Each micro-service corresponding to any given NIaaS service producer function can be categorized as a front-end microservice and a back end microservice, where the front-end microservice is responsible for communication with other NIaaS service producer/consumer functions over services-based interfaces, and the back-end microservice is responsible for the core business logic of the NIaaS function.

APIs can be peer-to-peer cloud-native APIs such as gRPC for synchronous request-response and for streaming notifications, or native Kubernetes APIs, git ops and Kafka pipelines, and the data model for the messages over these APIs shall be in YAML, or Open API specification.

The invention can be applied to all A.I. platforms that desire to be built with a holistic A.I. framework producing essential value-added A.I. services. The proposed NIaaS framework can apply generically to all domains and is not limited only to the telecom domain. The present disclosure is also applied to platforms that desire to be architected using services-based architecture principles, and that desired to be built using cloud-native implementation techniques.

While the present disclosure has been described with reference to one or more exemplary embodiments, it will be understood by those skilled in the art that various changes can be made and equivalents can be substituted for elements thereof without departing from the scope of the present disclosure. In addition, many modifications can be made to adapt a particular situation or material to the teachings of the disclosure without departing from the scope thereof. Therefore, it is intended that the present disclosure not be limited to the particular embodiment(s) disclosed as the best mode contemplated.

## Claims

1. A method for modelling, generating intelligence of and optimization of interdependent network entities in a wireless telecom network via a computer utilizing machine learning, the method executing on the computer comprising the steps of:
receiving network entity-specific data relating to a network function;
imputing missing values in the received network entity-specific data;
associating groups of interdependent network entities to generate aggregated data for joint observation to evaluate an impact each interdependent network entity has on each other;
predicting Key Performance Indicators (KPIs) of the interdependent network entities based on the aggregated data;
generating optimizations to improve the KPIs for the interdependent network entities based on the predicted KPIs;
testing the optimizations on a model and receiving input from the model on which the optimizations are tested; and
implementing control actions to various network functions based on the outcome of the tested optimizations.

2. The method of claim 1, wherein the step of generating aggregated data further comprises:
performing a time-correlated aggregation of Operations, Administration, and Maintenance of Fault, Configuration, Accounting, Performance, and Security (OAM FCAPS) data of different types from across different network functions and/or different interdependent network entities and at different levels.

3. The method of claim 2, wherein the OAM FCAPS comprises Fault Management (FM), Configuration Management (CM), Performance Measurement (PM), and Trace Reporting (TR) based on network events.

4. The method of claim 2, wherein the different levels are selected from the group consisting of: User Equipment (UE) level, Network Function (NF) level, UE group level, bearer level, slice level, slice subnet level, Quality of Service (QoS) level, Protocol Data Unit (PDU) session level, and any combinations thereof.

5. The method of claim 1, wherein the interdependent network entities comprise individual mobile network cells.

6. The method of claim 1, further comprising the steps of:
validating the entity-specific data; and
generating an alert when the data exceeds a threshold value or if the data has any sanitation issues.

7. The method of claim 1, wherein the step of generating optimizations further comprises:
analyzing data distribution and statistics relating to the entity-specific data; and
generating the predicted KPI's based in part on the analysis of data distribution and statistics.

8. The method of claim 1, further comprising the step of scaling and normalizing the entity-specific data.

9. The method of claim 1, wherein the optimizations relate to adjustments to configuration parameters or control decision variables.

10. The method of claim 9, further comprising the steps of:
exercising closed-loop control action to modify the configuration parameters and/or the control decision variables on the network function; or
modifying configurable hyper-parameters of the machine learning models; or
triggering machine learning life cycle management operations via a graphic user interface.

11. The method of claim 1, further comprising the step of generating an alert notification based on a predicted KPI data point.

12. The method of claim 1, wherein the network entity-specific data relating to a network function is received in real time and the optimizations to improve the KPIs are based on the real time data feeds, and wherein the step of testing the optimizations on a model and receiving input from the model comprises continuous performance monitoring based on the real time data received.

13. The method of claim 1, wherein the model comprises a digital twin of the underlying network from which the network entity-specific data is received.

14. The method of claim 1, wherein the network entity-specific data is generated by mobile telecom systems having different types of network data originating from different network functions with different network function types or having different types of network data from the management functions of the network functions at different levels of granularity.

15. The method of claim 1, wherein the network entity-specific data is generated by mobile telecom systems at different instances of time, during a reporting window.
